# EUROPEAN PATENT APPLICATION

(11) **EP 2 402 909 A1**
(43) Date of publication of application: **04.01.2012**
(21) Application number: 09840854.5
(22) Date of filing: 24.02.2009
(51) Int. Cl.: G06T 15/00, H04N 13/00

(54) **STEREOSCOPIC PRESENTATION SYSTEM**

(71) Applicant: REDROVER CO., LTD, Bundang-gu, Seongnam-si Gyeonggi-do 463-870 (KR)
(72) Inventor: HA, Hoe Jin, Seoul 137-070 (KR); CHOI, Jae Kwang, Seongnam-si Gyeonggi-do 463-500 (KR)
(74) Representative: Beck & Rössig European Patent Attorneys
(86) International application number: PCT/KR2009/000873
(87) International publication number: WO 2010/098508

(57) **Abstract**

The present invention relates to a stereoscopic presentation system. More particularly, the present invention relates to a stereoscopic presentation system capable of showing documents in a stereo by editing a three-dimensional object from a two-dimensional object such as character, image, diagram, and moving picture to output them to a stereoscopic image display unit. The stereoscopic presentation system according to an embodiment of the present invention comprises a two-dimensional object editing unit for editing character, image, diagram, and moving picture, a three-dimensional object editing unit for editing a three-dimensional object having a predetermined binocular disparity from the input two-dimensional object, a three-dimensional object storing unit in which the three-dimensional object is stored, and a stereoscopic image display unit for outputting the three-dimensional object stored in the three-dimensional object storing unit.

## Description

### Technical Field

The present invention relates to a stereoscopic presentation system. More particularly, the present invention relates to a stereoscopic presentation system capable of showing documents in a stereo by editing a three-dimensional object from a two-dimensional object such as character, image, diagram, and moving picture to output them to a stereoscopic image display unit.

### Background Art

Generally, presentation is defined as communication methods for accomplishing needs of presenters by appealing thinking, knowledge, information, solution and so forth to audience. Effective presentation is very important communication means to satisfy target and object of presenters.

As computer technology and display devices have been developed recently, there are presentation systems showing documents to audience employing documents editing program, beam projector, and screen.

In the meanwhile, documents are prepared and edited by the documents editing program. Typical examples are 'MS-WORD', POWERPOINT', and 'EXCEL' of Microsoft company, 'ACROBAT' of adobe systems, and 'Hangul' of Hancom company.

Also, the documents editing programs have evolved from inputting characters to inserting images, diagrams, and moving pictures.

However, there is a problem that the documents editing programs have been adopted to edit only planar document, but are not applicable to stereoscopic image technique that has been highlighted.

Another issue is that the documents editing programs are displayed on two-dimensional plane. Thus, presentation is not effective, and audience integrity becomes low.

### Disclosure

### Technical Problem

The present invention has been made in an effort to solve the above problems, and it is an object of the present invention to provide a stereoscopic presentation system capable of editing a three-dimensional object from character, image, diagram, and moving picture to show them in a stereo.

It is another object of the present invention to provide a stereoscopic presentation system capable of receiving a two-dimensional object edited by a prior document editing program to edit a three-dimensional object and show it in a stereo.

It is still another object of the present invention to provide a stereoscopic presentation system in which all stereoscopic image display units are applicable regardless of stereoscopic image display mode.

### Technical Solution

In order to accomplish the above objects, a first embodiment of the present invention provides a stereoscopic presentation system, comprising a two-dimensional object editing unit for editing character, image, diagram, and moving picture, a three-dimensional object editing unit for editing a three-dimensional object having a predetermined binocular disparity from the input two-dimensional object, a three-dimensional object storing unit in which the three-dimensional object is stored, and a stereoscopic image display unit for outputting the three-dimensional object stored in the three-dimensional object storing unit.

In a preferred embodiment, an external object receiving unit is further included. The external object receiving unit receives the two-dimensional object or the three-dimensional object from the outside. In addition, the external object receiving unit transmits the two-dimensional object input from the outside to the three-dimensional object editing unit or stores the three-dimensional object input from the outside in the three-dimensional object storing unit.

In a preferred embodiment, a stereoscopic formation converting unit is further included. The stereoscopic formation converting unit converts the three-dimensional object stored at the three-dimensional object storing unit to a polarization-type three-dimensional object, anaglyph-type three-dimensional object, a time-division-diplex type three-dimensional object, a lenticular-type three-dimensional object, or a barrier-type three-dimensional object.

In a preferred embodiment, the three-dimensional object editing unit comprises a three-dimensional object generating unit for generating a left object and a right object from the two-dimensional object to generate the three-dimensional object, and a stereoscopic presenting unit for controlling binocular disparity of the left object and the right object.

In a preferred embodiment, the three-dimensional object editing unit further comprises a default stereoscopic presenting unit sets the left object and the right object at a predetermined binocular disparity.

In a preferred embodiment, the three-dimensional object editing unit further comprises a motion presenting unit presents a motion by making the three-dimensional object move on a screen.

### Advantageous Effects

According to the present invention, the following superior effects are exhibited.

Specifically, a stereoscopic presentation system according to the present invention edits a three-dimensional object from a two-dimensional object such as character, image, diagram, or moving picture to show them in a stereo, thereby maximizing presentation and improving audience concentration.

Also, the stereoscopic presentation system according to the present invention receives a two-dimensional object edited by a prior document editing program to edit a three-dimensional object and show it in a stereo.

Also, in the stereoscopic presentation system according to the present invention, a three-dimensional object can be edited and all stereoscopic image display units are applicable regardless of stereoscopic image display mode, so that a stereoscopic presentation system with high compatibility can be provided.

### Description of Drawings

FIG. 1 shows a stereoscopic presentation system according to an embodiment of the present invention;
FIG. 2 shows production process of a three-dimensional object according to an embodiment of the present invention; and
FIG. 3 shows a motion presentation of a three-dimensional object generated by an embodiment of the present invention.

Throughout the drawings made according to the present invention, the elements having the substantially identical configurations and functions are designated by the same reference numerals.

### Description of the Reference Numerals in the Drawings

100: stereoscopic presentation system
110: 2-dimensional object editing unit
120: 3-dimensional object editing unit
130: 3-dimensional object storing unit
140: stereoscopic image display unit
150: external object receiving unit
160: stereoscopic formation converting unit
200: 2-dimensional object
300: 3-dimensional object

### Best Mode

As the terms used in the present invention, those terms that are typically used and are currently the most widely available have been adopted. However, in specific cases the terms are optionally furnished by the applicant, and these terms should be understood in light of the meanings given in the description or as used in the detailed description of the present invention, instead of depending on the definitions of such terms.

Hereinafter, preferred embodiments of the present invention are described in detail with reference to the accompanying drawings.

However, the present invention is not limited to the above embodiments, and may be embodied in other forms. Throughout the description, the same reference numerals indicate the same elements.

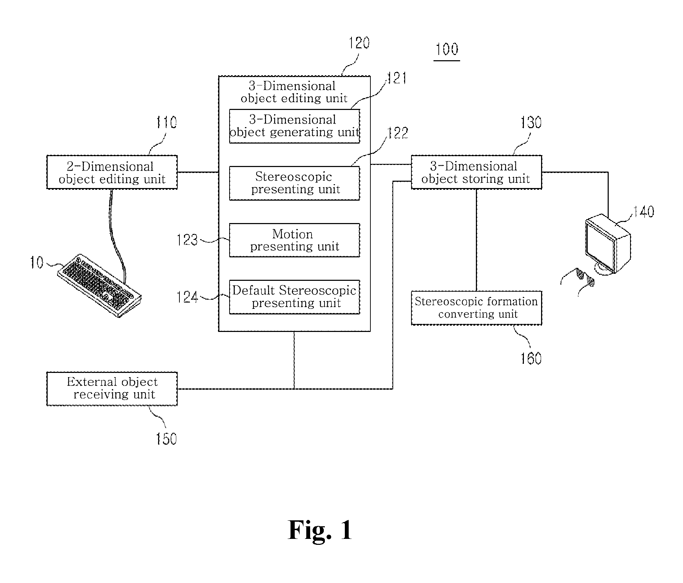

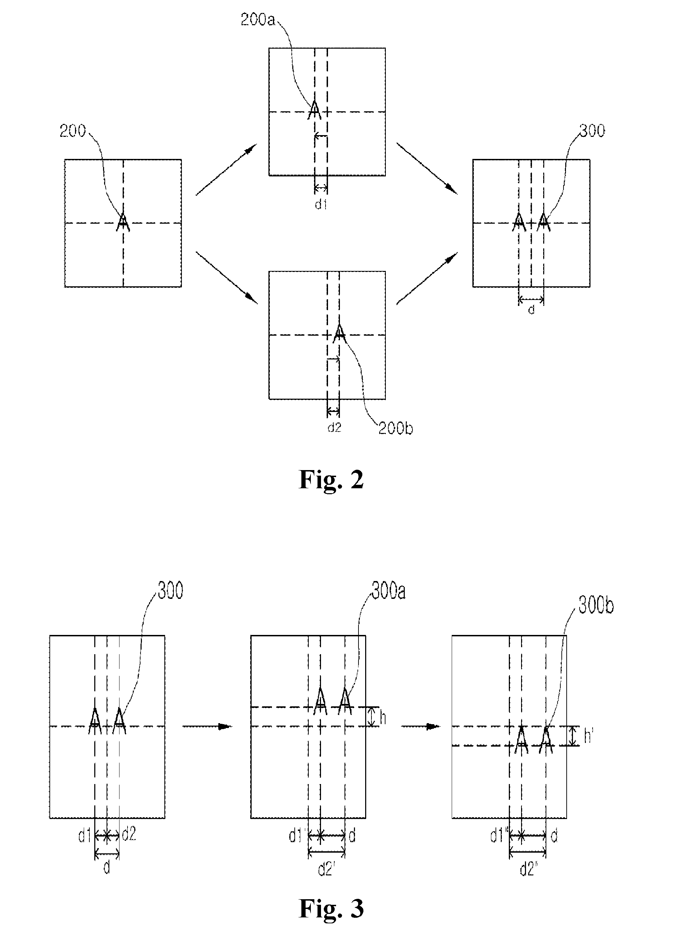

FIG. 1 shows a stereoscopic presentation system according to an embodiment of the present invention. FIG. 2 shows production process of a three-dimensional object according to an embodiment of the present invention. FIG. 3 shows a motion presentation of a three-dimensional object generated by an embodiment of the present invention.

With reference to Figures, a stereoscopic presentation system 100 according to an embodiment of the present invention comprises a two-dimensional object editing unit 110, a three-dimensional object editing unit 120, a three-dimensional object storing unit 130, an external object receiving unit 150, a stereoscopic formation converting unit 160, and a stereoscopic image display unit 140.

The two-dimensional object editing unit 110 performs a function to receive character, image, diagram, or moving picture by an inputting device from user to a two-dimensional object 200 in documents.

The three-dimensional object editing unit 120 receives the two-dimensional object 200 generated from the two-dimensional object editing unit 110 to a three-dimensional object 300 with constant binocular disparity.

Meanwhile, he or she views object and then feels them in a stereo. This principle is to be understood that he or she views objects with their both eyes apart to the width direction in constant binocular disparity. And, different image objects imaged in left eye and right eye become fused in one object, so that stereoscopic effect may be imparted to the user.

That is, a left-eye object 200a and a right-eye object 200b having constant binocular disparity (d) are generated from the two-dimensional object 200 as if observers view objects with their both eyes. As a result, stereoscopic effect may be imparted to the user from the two-dimensional object.

Also, the three-dimensional object editing unit 120 comprises the two-dimensional object generating unit 121, the stereoscopic presenting unit 122, a motion presenting unit 123, and a default stereoscopic presenting unit 124.

The three-dimensional object generating unit 121 receives the two-dimensional object 200 to generate the left-eye object 200a and the right-eye object 200b. The left-eye object 200a is positioned to the left as much as distance (d1) that corresponds to half size of binocular disparity (d). The right-eye object 200b is positioned to the right as much as distance (d1) that corresponds to half size of binocular disparity (d).

In this case, the left-eye object 200a and the right-eye object 200b are defined as the three-dimensional object 300.

In addition, when the left-eye object 200a and the right-eye object 200b of the three-dimensional object 300 are respectively observed at the same time by both eyes of users, the left-eye object 200a and the right-eye object 200b are apart as much as binocular disparity (d), so that they are overlappedly observed.

The stereoscopic presenting unit 120 controls binocular disparity (d) that corresponds to a distance between the left-eye object 200a and the right-eye object 200b.
In other words, the stereoscopic presenting unit 120 controls perspective that user feels about the three-dimensional object.

In the meanwhile, the stereoscopic presenting unit 120 can present the stereoscopic effect by controlling the binocular disparity (d) as well as transforming the shape of the left-eye object 200a and the right-eye object 200b.

The motion presenting unit 123 moves the three-dimensional object 300 in a plane to present a motion thereof while keeping the three-dimensional object 300 with binocular disparity (d) controlled by the stereoscopic presenting unit 120.

For example, the three-dimensional object 300 is moved to a right upper portion 300a in a plane by changing distances d1 and d2 for the binocular disparity (d) of the three-dimensional object 300 to d1' and d2' and setting height (h). Again, by changing distances d1 and d2 to d1" and d2" and setting height (h'), the three-dimensional object 300 is moved to a left upper portion 300a in a plane.

The default stereoscopic presenting unit 124 presents stereoscopic effect of the three-dimensional object 300 at a predetermined binocular disparity.

Also, the default stereoscopic presenting unit 124, for instance, can determine binocular disparity (d) previously stored in the two-dimensional object 200 according to the size of the two-dimensional object 200 or document form edited to the two-dimensional object 200.
The three-dimensional object storing unit 130 stores the three-dimensional object 130 generated by the three-dimensional object editing unit 120.

The external object receiving unit 150 performs a function to receive the two-dimensional object 200 or the three-dimensional object 300 generated from the outside.

Additionally, the external object receiving unit 150 transmits the two-dimensional object 200 to the three-dimensional object editing unit 120, thereby editing the two-dimensional object 200 input from the outside to the three-dimensional object 300.

In this case, the two-dimensional object 200 may be two-dimensional object 200 edited from 'MS-WORD', 'Power-point', and 'Excel' of Microsoft, 'Acrobat' of Adobe systems, or 'Hangul' of Hancom company.

Also, the external object receiving unit 150 stores the three-dimensional object 300 input from the outside at the three-dimensional object storing unit 300.

The stereoscopic formation converting unit 160 converts the three-dimensional object stored at the three-dimensional object storing unit 130 to a polarization-type three-dimensional object, stereo-type three-dimensional object, a time-division-diplex type three-dimensional object, a lenticular-type three-dimensional object, or a barrier-type three-dimensional object.

The stereoscopic image display unit 140 is a device receiving stereoscopic image data to show stereoscopic image to user and divided into stereoscopic type and anti-stereoscopic type. Stereoscopic type comprises anaglyph type, polarization type, and time-division-diplex type. In the anaglyph type, one of the left and right image data is output as red, and the other is output as blue to observe image through color filter. In the polarization type, a user who is wearing polarizing eyeglasses can observe image using two sheets of display devices having different polarizations and a half mirror. In the time-division-diplex type, stereoscopic image can be observed by sequentially suggesting the left and right images alternatively and synchronizing a shutter-glass to open and close them.

The anti-stereoscopic type is divided into a lenticular type and barrier type. In the lenticular type, the left and right images are arranged alternatively to a sheet of the display device. Then, the left and right images are separated using refractive index of a lenticular sheet adhered to the front of the display device. In the barrier type, the left and right images are separated by arranging a slit in front of the sheet of the display device.

That is, the stereoscopic formation converting unit 160 transforms the three-dimensional object and then stores it depending on a kind of the stereoscopic image display unit 140.

For example, the stereoscopic image display of polarization type outputs the three-dimensional object 300 in itself. In the anti-stereoscopic type, the left-eye object 200a and the right-eye object 200b are arranged at regular intervals alternatively to one display panel, thereby converting them to the three-dimensional object 300 to be displayed on the one display panel.

### Industrial Applicability

Although the present invention has been described herein with reference to the foregoing embodiments and the accompanying drawings, the scope of the present invention is defined by the claims that follow. Accordingly, those skilled in the art will appreciate that various substitutions, modifications and changes are possible, without departing from the spirit of the present invention as disclosed in the accompanying claims. It is to be understood that such substitutions, modifications and changes are within the scope of the present invention.

## Claims

1. A stereoscopic presentation system, comprising:
a two-dimensional object editing unit for editing character, image, diagram, and moving picture;
a three-dimensional object editing unit for editing a three-dimensional object having a predetermined binocular disparity from the input two-dimensional object;
a three-dimensional object storing unit in which the three-dimensional object is stored; and
a stereoscopic image display unit for outputting the three-dimensional object stored in the three-dimensional object storing unit.

2. The stereoscopic presentation system of claim 1, further comprising an external object receiving unit for receiving the two-dimensional object or the three-dimensional object from the outside, wherein the external object receiving unit transmits the two-dimensional object input from the outside to the three-dimensional object editing unit or stores the three-dimensional object input from the outside in the three-dimensional object storing unit.

3. The stereoscopic presentation system of claim 1 or claim 2, further comprising a stereoscopic formation converting unit converting the three-dimensional object stored at the three-dimensional object storing unit to a polarization-type three-dimensional object, anaglyph-type three-dimensional object, a time-division-diplex type three-dimensional object, a lenticular-type three-dimensional object, or a barrier-type three-dimensional object.

4. The stereoscopic presentation system of claim 3, wherein the three-dimensional object editing unit comprises:
a three-dimensional object generating unit for generating a left object and a right object from the two-dimensional object to generate the three-dimensional object; and
a stereoscopic presenting unit for controlling binocular disparity of the left object and the right object.

5. The stereoscopic presentation system of claim 4, wherein the three-dimensional object editing unit further comprises a default stereoscopic presenting unit sets the left object and the right object at a predetermined binocular disparity.

6. The stereoscopic presentation system of claim 5, wherein the three-dimensional object editing unit further comprises a motion presenting unit presents a motion by making the three-dimensional object move on a screen.
